(19) Europäisches Patentamt
European Patent Office
Office européen des brevets

(11) EP 2 903 710 B1

(12) # EUROPEAN PATENT SPECIFICATION

(45) Date of publication and mention of the grant of the patent:
**12.05.2021 Bulletin 2021/19**

(21) Application number: **13777159.8**

(22) Date of filing: **08.10.2013**

(51) Int Cl.:
***B01D 9/00*** *(2006.01)* ***B01D 11/04*** *(2006.01)*
***C02F 1/26*** *(2006.01)* ***C22B 3/42*** *(2006.01)*

(86) International application number:
**PCT/NL2013/050712**

(87) International publication number:
**WO 2014/058312 (17.04.2014 Gazette 2014/16)**

(54) **DESALINATION OF AQUEOUS MEDIA USING IONIC LIQUIDS**

ENTSALZUNG WÄSSRIGER MEDIEN MITTELS IONISCHER FLÜSSIGKEITEN

DESSALEMENT DE MILIEUX AQUEUX À L'AIDE DE LIQUIDES IONIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.10.2012 NL 2009584**

(43) Date of publication of application:
**12.08.2015 Bulletin 2015/33**

(73) Proprietor: **Stichting Wetsus Centre of Excellence for Sustainable Water Technology**
**8934 CJ Leeuwarden (NL)**

(72) Inventors:
- **PARMENTIER, Dries Gerard Cecile**
  **8934 CJ Leeuwarden (NL)**
- **METZ, Sybrandus Jacob**
  **8934 CJ Leeuwarden (NL)**
- **KROON, Maaike Christine**
  **8934 CJ Leeuwarden (NL)**

(74) Representative: **Verdijck, Gerardus et al**
**Arnold & Siedsma**
**Bezuidenhoutseweg 57**
**2594 AC The Hague (NL)**

(56) References cited:
**EP-A1- 0 005 859 EP-A2- 2 258 706**

- **8: "Ionic Liquid as Novel Solvent for Extraction and Separation in Analytical Chemistry" In: "Ionic Liquids: Applications and Perspectives", 2 February 2011 (2011-02-02), XP002703682, ISBN: 978-953-307-248-7 pages 154,156,**
- **LISA FISCHER ET AL: "Ionic liquids for extraction of metals and metal containing compounds from communal and industrial waste water", WATER RESEARCH, ELSEVIER, AMSTERDAM, NL, vol. 45, no. 15, 13 June 2011 (2011-06-13) , pages 4601-4614, XP028243792, ISSN: 0043-1354, DOI: 10.1016/J.WATRES.2011.06.011 [retrieved on 2011-06-21]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 903 710 B1

Printed by Jouve, 75001 PARIS (FR)

## Description

The present invention relates to a method for extracting metal ions and/or metalloid ions from an aqueous medium. Further, the present invention relates to the use of ionic liquids.

Chemical and mining industry produces a lot of aqueous streams polluted with valuable (heavy) metal salts. Further, groundwater often contains a lot of aqueous streams polluted with valuable (heavy) metal salts, which have to be removed before usage. Conventional practices to recover salts from aqueous media comprise several methods. Such methods are for example based on evaporation, crystallization, electrodialysis reversal, membrane separation, or filtration. Experimental difficulties prevent removing these metal salts economically from the aqueous phase, because conventional methods to selectively recover and purify the metal salts use volatile organic solvents and harmful chemicals, such as sulfuric acid and cyanex. It is accordingly, desirable to develop new methods that are able to selectively extract and purify metal salts from aqueous solutions in a more environmentally and economically attractive way. Conventional salt extraction by evaporation from sea water is a costly method. In order to obtain the salts that are dissolved by one litre of water, one has to evaporate the water, collect the water vapour and subsequently condensate the water vapour to obtain purified water. It costs approximately 2.26 MJ heat to evaporate one litre of water using this method. Moreover, salt extraction by evaporation of the solvent is non-selective and results in the provision of a rather crude salt extract. Both the amounts of the individual salts as present in the solvent as well as the ratio of the salt composition as present in the solvent are directly reflected in the salt as obtained by evaporation. In order to obtain a selection of specific salt species by evaporation, a pre-treatment is necessary which may comprise selective precipitation or separation of salt ions out of the aqueous solvent. Such a pre-treatment will increase the costs to obtain salts by such a method. When salts are obtained from sea water by evaporation in the outdoors, there is a considerable dependency on climatic conditions for the method to be applicable in a cost-effective and efficient manner. Furthermore this method is rather crude and primitive which is reflected in the purity of salts as obtained by this method. Salts may not be of sufficient grade for it to be directly applicable in subsequent processes. Also, the risk of pollutions resulting from environmental or biological factors may be too high. More importantly, such a method cannot be applied effectively when selective extraction of salts is needed.

Another method to obtain salts from a solution is based on crystallization of such salts from the solvent. Crystallization is a natural process of formation of solid crystals which precipitate from a solution. This process can be influenced by artificial manipulation, such as by cooling. Crystallization can also be considered to be a chemical solid-liquid separation technique in which mass transfer of a solute from the liquid solution to a solid crystalline phase occurs.

Crystallization starts with nucleation which, on an industrial scale, depends on a supersaturating driving force. As the initiation of nucleation is a poorly understood process, modelling of this process is difficult. A second crystallization method is secondary nucleation. Again, this process is not well understood making it difficult to anticipate the behaviour and outcome of this process and crystallization as a whole. Further, an inconvenient of the crystallization process is the large energy requirement.

Another known method is electrodialysis reversal water desalination. Electrodialysis reversal water desalinization, also designated as EDR, is a membrane process. An electric current migrates via dissolved salt ions, including fluorides, nitrates and sulfates, through an electrodialysis stack consisting of alternating layers of cationic and anionic ion exchange membranes. Periodically, the direction of ion flow is reversed by reversing the polarity applied electric current.

Various filtration methods are known, such as nanofiltration. Nanofiltration is a relatively recent membrane filtration process used most often with low total dissolved solids water such as surface water and fresh groundwater, with the purpose of softening (polyvalent cation removal) and removal of disinfection by-product precursors such as natural organic matter and synthetic organic matter.

Nanofiltration (NF) is a cross-flow filtration technology which ranges somewhere between ultrafiltration (UF) and reverse osmosis (RO). The nominal pore size of the membrane is typically about 1 nanometer. Nanofilter membranes are typically rated by molecular weight cut-off (MWCO) rather than nominal pore size. The MWCO is typically less than 1000 atomic mass units (daltons). The transmembrane pressure (pressure drops across the membrane) required is lower (up to 3 MPa) than the one used for RO, reducing the operating cost significantly. However, NF membranes are still subject to scaling and fouling and often modifiers such as anti-scalants are required for use.
In reverse osmosis, a liquid-phase pressure-driven separation process in which applied transmembrane pressure causes selective movement of solvent against its osmotic pressure difference. In other words, it is based on applying pressure to force a solution of high solute concentration through a membrane wherein the membrane retains the solute and the solvent of low solute concentration is collected. Thereby, no purified solute is obtained, but only a concentration is carried out.

However, reverse osmosis methods may not be suitable in every experimental situation for the following reasons. The method requires high pressure to force the solution through a semi-permeable membrane which allows passage of the solvent while retaining the solute to a certain extent. Additionally, the efficiency of the process of reverse osmosis

may be intrinsically limited in extracting solutes as the pressure to obtain more solutes from a solvent increases with decreasing solute concentration. Further, although reverse osmosis allows selective extraction of solutes to a certain extent, this mechanism is mainly based on a size-exclusion limit. Possibilities for differential or selective extraction of solutes therefore seem limited. Furthermore, industrial scale desalination requires industrial scale membranes to be produced and maintained, which is a costly factor. Moreover, reverse osmosis methods were initially focussed to obtain purified water and not towards obtaining solutes from the solvent. Also, the stability and durability of such membranes is often insufficient to allow efficient and reliable industrial application to extract solutes by a method based on such membranes. This is especially an issue when the size of such membranes is up-scaled for industrial applications. When such a membrane of increased, industrial suitable size is used, it needs to be of high quality over the full size of the membrane. Any area of such large membranes which is of compromised, low quality can quite easily lead to a small, local breakage of the membrane and render the entire membrane unusable. The life-span of such membranes is therefore not optimal for industrial applications. Additionally, reverse osmosis methods usually require a feed pre-treatment which is a process which is carried out on a crude feed stream, prior to feeding to a membrane separation system, to eliminate objectionable components such as biological agilents and/or colloids that might impede the stable operation of the membrane. A post-treatment of the solvent as obtained (also termed permeate) may also be required wherein one or more final conditioning steps are needed to improve permeate quality. This may comprise contacting the permeate with anion exchange resins to remove trace ions in the permeate of a reverse osmosis product stream. The inclusion of such pre- and post-treatments increase the costs to obtain salts from aqueous media by such method

The following documents describe the use of ionic liquids for extraction and separation of compounds: "Ionic Liquid as Novel Solvent for Extraction and Separation in Analytical Chemistry" an extract from the book of "Ionic Liquids: Applications and Perspectives", ISBN: 978-953-307-248-7;

EP 2 258 706 A2;

"Ionic liquids for extraction of metals and metal containing compounds from communal and industrial waste water", Lisa Fischer et al.,pages 4601-4614, ISSN: 0043-1354;

EP 0 005 859 A1.

It is known that the extraction of heavy metal process based on unsaturated fatty acids and their soaps is capable to remove heavy metals, ammonium and rare earth metals from water in a wide range of concentrations. This process is based on cation exchange in which a sodium or calcium ion was replaced by a heavy metal ion. Regeneration is done by adding sulphuric acid, to form metal sulphate, and afterwards sodium hydroxide to form the fatty acid soap again. Metal exchange makes that the heavy metals are for instance exchanged for sodium ions. However, this method renders the water salty.

As recited above, toxicity problems occur when selectively recovering and purifying the metal salts, or the aqueous stream, by using of volatile organic solvents and/or environmentally prejudicial chemicals, such as sulphuric acid and cyanex.

The object of the current invention is to provide a solution to the above-mentioned problems by providing a method for extracting a salt from an aqueous medium.

This object is achieved by the invention by the provision of the method for extracting metal and/or metalloid ions from an aqueous medium as defined in claim 1.

The method according to the present invention extract metal ions and/or metalloid ions from an aqueous medium. Advantageously, the aqueous medium is not pre-treated before carrying out the method according to the present invention. Further, any metal ions and/or any metalloid ions can be extracted by the method according to the present invention. Advantageously, the method according to the present invention is suitable and gives good results in extracting metal and/or metalloid ions selected from the group, lithium sodium, potassium, rubidium, cesium, beryllium, magnesium, calcium, strontium, barium, titanium, zirconium, vanadium, niobium, tantalum, chromium, molybdenum, tungsten, manganese, technetium, rhenium, iron, ruthenium, osmium, cobalt, rhenium, iridium, copper, silver, gold, nickel, palladium, platinum, zinc, cadmium, mercury, boron, aluminum, gallium, indium, thallium, tin, lead, arsenic, antimony, bismuth. Further, the metal and/or metalloid ions can also be chosen from the group scandium, yttrium, luthetium, as well as any elements of the lanthanides and/or actinides. Additionally, metal and/or metalloid ions that can be removed from the aqueous medium can be oxides or hydroxides of metal and/or oxides or hydroxides of metalloids. Examples of such oxides are any oxide or hydroxides of the element described above, as well as the ions uranyl, borate, chromate, tungstate, molybdate, vanadate. According to this embodiment, also ultra-traces of these anionic metal complexes are removed from the aqueous medium. Removal of such anions with conventional methods is especially difficult or costly. Selective extraction by the method of the current invention allows the provision of such ions in a certain, more purified form. Consequently, less costly pre-or post-treatments will be necessary to obtain such ions in a subsequent process or application.

With a molybdate herein is meant a salt comprising a molybdenum atom. With a borate herein is meant a salt comprising a boron atom. With a tungstate herein is meant a salt comprising a tungsten atom. With a chromate herein is meant a salt comprising a chromium atom. A uranyl ion herein means any ion with the formula $U_xO_y$ wherein x is

preferably 1 or an integer between 1 and 3 and y is preferably 2 or an integer between 1 and 3.

The method may also allow to extract some non-metal ions, such as non-metal anions. Non-metal anions can be any non-metal anion or an anion comprising more than one non-metallic element. Non-metal anions can be anions chosen from the group fluoride ($F^-$ ), chloride ($Cl^-$), bromide ($Br^-$), iodide ($I^-$), perfluorate ($FO_4^-$), perchlorate ($ClO_4^-$), perbromate ($BrO_4^-$), periodate ($IO_4^-$), fluorate ($FO_3^-$), chlorate ($ClO_3^-$), bromate ($BrO_3^-$), iodate ($IO_3^-$), fluorite ($FO_2^-$), chlorite ($ClO_2^-$), bromite ($BrO_2$-), iodite ($IO_2^-$), hypofluorite ($FO^-$), hypochlorite ($ClO^-$ ), hypobromite ($BrO^-$), hypoiodite($IO^-$ ), cyanate ($CN^-$), hydroxide ($OH^-$), sulfite ($SO_3^{2-}$), sulfate ($SO_4^{2-}$), peroxomonosulfate ($SO_5^{2-}$), peroxodisulfite ($S_2O_8^{2-}$).

An important advantage of the present invention is that the ionic liquids (ILs) according to the present invention allow extraction (also designated as removal) of a wide range of individual and/or particular salts and/or metal ions from an aqueous medium.

In the context of the present invention, ionic liquids are liquid salts made of an organic cation and a wide variety of anions that are liquid at room temperature. While classical solvents are made of neutral molecules, ILs are made of large ions which are held together by electrostatic interactions, and have specific properties that are different from solvents of neutral molecules. The ionic liquids according to the method of the present invention comprise substantially hydrophobic anions. By "substantially hydrophobic" is meant that at least a part of the anion of the ionic liquid is non-polar.

Ionic liquids combine excellent thermal and chemical stabilities with good and tuneable solubility and catalytic properties. Ionic liquids can, as a result of these properties, be designed to perform a specific task and/or designed to operate in a particular manner, and/or designed to be used under particular conditions (in this case they are also designated as Task Specific Ionic liquids (TSIL)). Such preferred properties of an ionic liquid can be designed by selecting the type of cation(s) and/or anion(s) or particular cation(s) and/or anion(s) from which an ionic liquid is constituted. Furthermore, such properties also relate to the side-chain of such cation(s) and/or anion(s) or combination of such ions. The properties of an ionic liquid that relate to or determine the suitability of the method according to the invention include, but are not limited to, solubility properties, hydrophobic or hydrophilic properties, properties relating to polarity, hygroscopic properties, thermal properties, catalytic properties, chemical properties, water miscibility properties, and properties like density and viscosity. Careful design of an ionic liquid, based on these properties, allows selective extraction of a certain salt or metal from an aqueous medium. This is especially advantageous when the aqueous medium comprises a variety of different solutes in a variety of different concentrations.

Liquid-liquid extraction is an important technique for metal ion separation which can be carried out as an operation in a continuous mode, via the use of relatively simple equipment and the employment of only small quantities of reagent. These advantages are only some of the advantages of liquid-liquid extraction. One disadvantage of classical liquid-liquid extraction is the use of flammable, volatile or toxic water-immiscible organic solvents. One of the possibilities to improve the sustainability of this process is the use of ionic liquids (ILs) as water-immiscible extractants, such as in the method of the present invention. The use of ILs as extracting agents for the recovery of valuable metals from waste water is also an interesting alternative for waste water plants. This can be done in two different ways. The first option is based on using special extractants (e.g. crown ethers, cyanex) to extract the metals from the aqueous phase into the IL phase. However, in these systems also ion exchange occurs: the uptake of the metal ion is accompanied by dissolution of the cation from the ionic liquid into the aqueous phase. Another option is to use task-specific ionic liquids (TSILs) as extractants which are not prone to ion exchange. These TSILs have an ion that has a functionality that favours interaction with metal ions. TSILs can be specifically used for metal extraction, in particular with carboxylic acid, phosphinic acid, thiourea, urea, thioether, and thiol functionalities in their ions. In the present invention, TSILs with unsaturated fatty acids were synthesized and evaluated for their salt extraction capabilities. Metal extraction functionalities for these anions are their double bond(s) together with their carboxylic group. The use of these anions, which are natural and biodegradable, for IL synthesis allows making ILs more environmentally acceptable for industrial applications. Highly hydrophobic cations, with very low water solubility, are chosen in the present invention as counter ions to minimize ion exchange and maximize metal extraction.

The term 'salt' herein is used in its broadest meaning. A salt herein is any chemical compound that is composed of two or more different elements and molecules which can dissolve to a certain extent in an aqueous medium thereby forming a cation and anion. Such a cation or anion may be inorganic (e.g. $K^+$ or $F^-$) or organic (e.g. acetic acid; $CH_3COO^-$ ). Such a cation or anion may be single atoms (e.g. $Na^+$ or $Cl^-$) or may consist of more than one atom (e.g. $NO_3^-$ or more complex ions as e.g. hexacyanoferrate $[Fe(CN)_6]^{3-}$).

Salt in the context of the present invention includes complex ions, e.g. ions which contain a metal cation bound to one or more small molecules or ions, such as $O^{2-}$, $OH^-$, $CN^-$. Herein the term 'metal' is meant to include any metal from the periodic table.

The term 'metalloid' in the context of the present invention is meant to include any metalloid from the periodic table.

According to the present invention, the (hydrophobic) aliphatic carboxylate anion has at least one unsaturated carbon-carbon bond, such as one unsaturated carbon-carbon bond, such as two unsaturated carbon-carbon bonds, such as three unsaturated carbon-carbon bonds.

The carboxylate anion has at least one unsaturated carbon-carbon bond is an anion of a fatty acid.

The properties of the ionic liquid can be further tuned by considering the type of salt present in the water (in other words, the nature of the metal and/or metalloid ions to be extracted), the concentration of the metal ions and/or metalloid ions present in the aqueous medium, or any concentration of another cation or anion present in the medium. This is of particular interest when a certain salt metal ion and/or metalloid ion or type of salt and/or metal needs to be selectively obtained from a particular aqueous medium. Such considerate design or tuning of ionic liquids to ions to be extracted can in such cases lead to an enhanced efficiency of extraction.

According to the present invention the extraction of heavy metals works based on actual metal extraction instead of metal exchange. In the present invention, the aliphatic carboxylate anion, having at least one unsaturated carbon-carbon bond, has between 8 and 28 carbon atoms, preferably between 12 and 22 carbon atoms.

According to the present description, the aliphatic carboxylate anion, having at least one unsaturated carbon-carbon bond, is crossed-linked. By cross-linked, it is to be understood that the aliphatic carboxylate anion may be polymerized to a certain extent and that the at least one double carbon-carbon bond present in the anion allows the formation of a network.

According to the present description, the ionic liquid comprises an aliphatic carboxylate anion with at least one unsaturated carbon-carbon bond that has been cross-linked with a moiety selected from an acrylate group and a methacrylate group. Accordingly, the ionic liquid can further be used in applications where a polymerized carboxylate anion is suitable.

In the context of the present invention, any ionic liquid being liquid at room temperature (namely, in the range 10°C to 40°C, preferably in the range 20°C to 30°C) is suitable for the method according to the present invention.

According to the present invention, the ionic liquid comprises a cation selected from the group consisting of ammonium, imidazolium, pyrrolidinium, pyridinium and phosphonium.

According to the present description, the ionic liquid comprises an ammonium having at least one alkyl substituent comprising at least 8 carbon atoms. In the context of the present invention, by "ammonium" is to be understood the cation formed by a quaternary amine $NR_4^+$, having four substituents that can be different, or the same. Advantageously, R is an alkyl of any length. Preferably, R is an alkyl having 1 to 20 carbon atoms, more preferably 1 to 12 carbon atoms, most preferably 1 to 8 carbon atoms. Accordingly, R can be methyl, ethyl, n-propyl, i-propyl, n-butyl, i-butyl, t-butyl, n-pentyl, n-hexyl, n-heptyl, n-octyl, n-nonyl, n-decyl, n-undecyl, n-dodecyl. Good results have been obtained when said ammonium has at least one alkyl substituent comprising at least 8 carbons atoms, such as at least two alkyl substituents comprising at least 8 carbons atoms, such as at least three substituents comprising at least 8 carbon atoms, or such as the four substituents of the ammonium comprising at least 8 carbon atoms.

Ionic liquids (ILs) with unsaturated fatty acids as anions were synthesized. Preferred ILs for synthesising are organic salts formed by the combination of bulky organic cations with a wide variety of anions. The fatty acids used are preferably liquid at room temperature. Examples of the organic IL cations include Tetraoctylammonium ($N_{8888}$), Methyltrioctylammonium ($N_{8881}$), and of the unsaturated fatty acids include Oleate (18:1)and Linoleate (C18:2). The formulas of these ions are as follows:

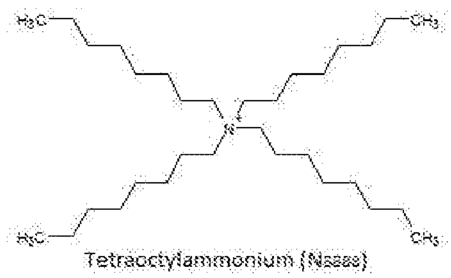
Tetraoctylammonium ($N_{8888}$)

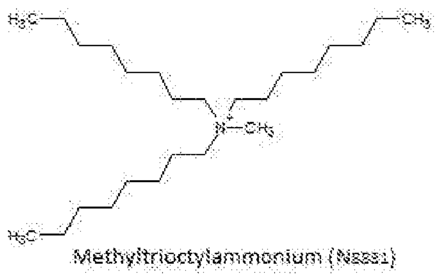
Methyltrioctylammonium ($N_{8881}$)

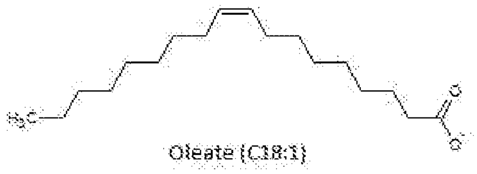
Oleate (C18:1)

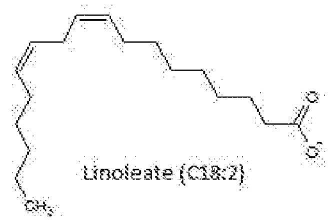
Linoleate (C18:2)

Another example of an anion which can be used in the present ionic liquid is monensin. Monensin is preferably combined with Tetraoctylammonium ($N_{8888}$), which formulas of both are as follows:

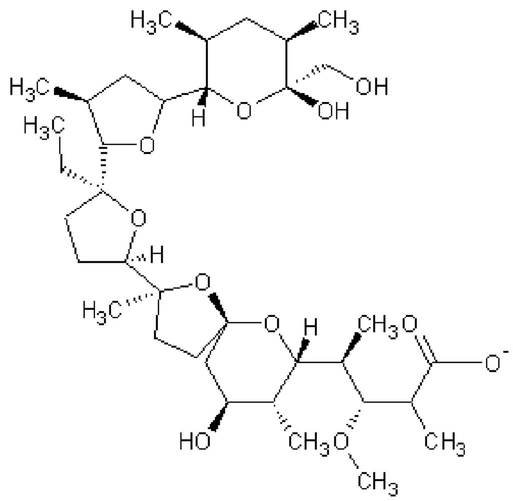

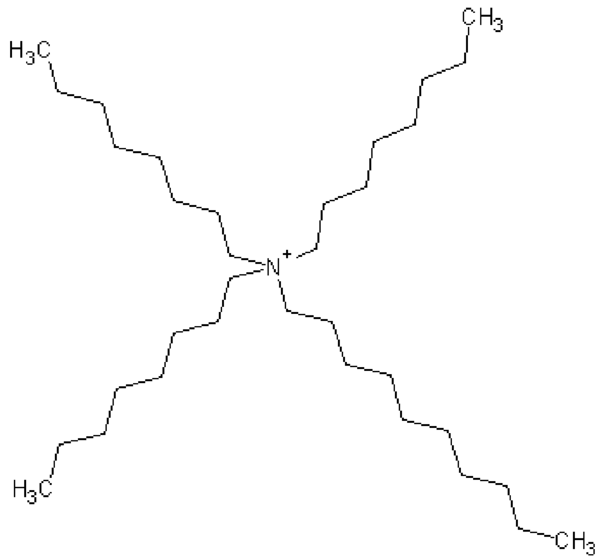

According to the present invention, the ionic liquid is selected from the group of tetraoctylammonium linoleate ($N_{8888}$ C18:2), methyltrioctylammonium linoleate ($N_{8881}$ C18:2), tetraoctylammonium oleate ($N_{8888}$ C18:1), methyltrioctylammonium oleate ($N_{8888}$ C18:1), tetraoctylammonium monensin, and a combination thereof.

Alternatively, the present ionic liquid is tetraoctylphosphonium oleate, preferably having the following formula:

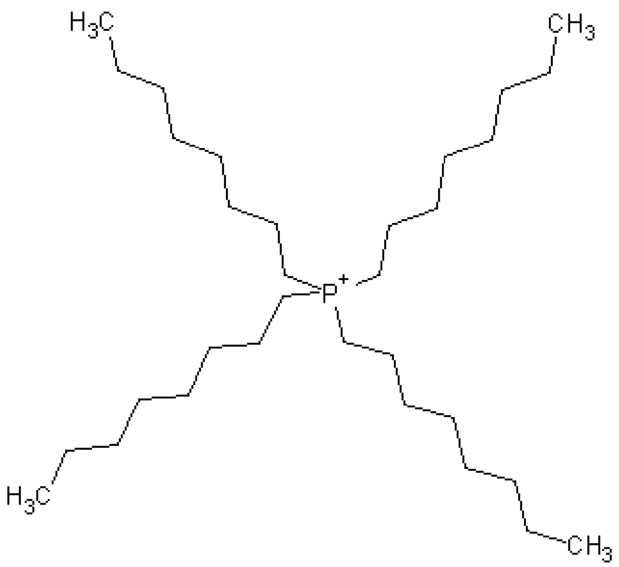

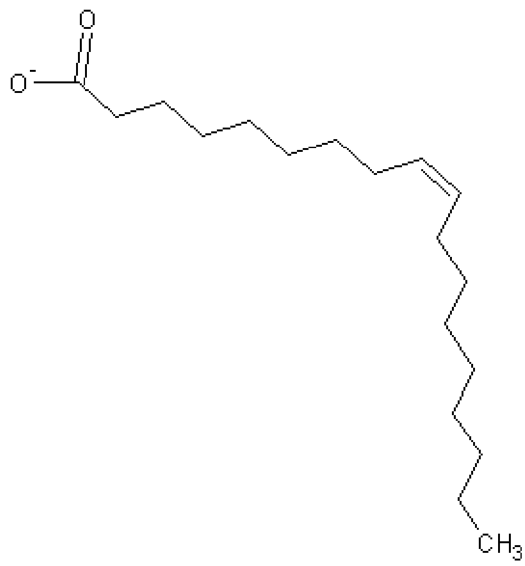

Unsaturated fatty acids means according to the present invention fatty acids with one or more double bonds between carbon atoms. The aliphatic chain of the fatty acids can have any length from 4 carbon atoms to 28 or more carbon atoms. Preferably, in the context of the present invention, unsaturated fatty acids were used as anions to synthesize TSIL. These TSIL can extract metal via the double bound(s) of the anions together with their carboxylic group. The metal-ligand interaction between the double bound and the heavy metal is strengthened because next to σ-bond interaction there is also n-back donation.

According to the present description, the ionic liquid can also comprise a cation comprising at least two amino acids. Accordingly, the cation is a peptide. According to the disclosure, the ionic liquid can also comprise cation of an oligopeptide. In the context of the present invention, a peptide is to be understood as a molecule consisting of at least two amino acids joined by a peptide bond. The peptide comprises at least two amino acids, such as two, three, four, five, six, seven, eight amino acids. Accordingly, in the context of the present invention, the peptide comprises two amino acids or more, three amino acids, or more, four amino acids, or more, five amino acids, or more, six amino acids, or more. In the context of the present invention, the oligopeptide advantageously comprises between at least two and at most four amino acids, more advantageously two, or three amino acids. In the context of the present invention, amino acids are made from amine ($-NH_2$) and carboxylic acid (-COOH) functional groups, along with a side-chain specific to

each amino acid. They can have the functional groups' locations as alpha- ($\alpha$-), beta- ($\beta$-), gamma- ($\gamma$-) or delta- ($\delta$-) amino acids. The amino acids in the context of the present invention are selected from the group histidine, alanine, isoleucine, arginine, leucine, asparagines, lysine, aspartic acid, methionine, cysteine, phenylalanine, glutamic acid, threonine, glutamine, tryptophan, glycine, valine, ornithine, proline, selenocysteine, serine, taurine, tyrosine. Advantageously, said amino acids (any of the alpha- ($\alpha$-), beta- ($\beta$-), gamma- ($\gamma$-) or delta- ($\delta$-) amino acids mentioned above) can comprise a -S, -O, more than one -N atom per amino acid, or any (electron) donor atoms that can provide good results in removing metal and/or metalloid ions from an aqueous medium, such as any cysteine-based amino acid (i.e. cysteine, or any amino acid obtained from the reaction of the thiol functional group of cysteine with another chemical function), methionine.

Specifically, by linking two or three substantially apolar amino acids (such as amino acids comprising an alkyl, aryl or alkenyl chain, i.e. leucine and phenylalanine) to each other, a naturally based hydrophobic cation is formed. The use of protective groups for the amine and carboxylic acid group may be necessary to selectively link one amino acid to another. The amine group of the first amino acid can be protected by methylation, or by any protection method. The acid group of the last amino acid can be protected by performing an esterification with an alcohol (designated as alkyl-OH, preferably comprising between four and ten carbon atoms, preferably between four and eight, more preferably between six and eight, such as hexanol, heptanol, octanol). Said esterification can increase the hydrophobicity of the cation and also contributes to better amide bindings when forming the peptide.

Advantages towards metal extraction are that di- and tripeptides with hydrophobic amino acids, i.e amino acids comprising a hydrocarbon chain of at least four carbon atoms, such as an alkyl, aryl, or alkenyl chain of four, five, six, seven, eight, nine, ten, eleven, twelve carbon atoms, or more.

The method according to the invention can be applied with the purpose of obtaining a salt and/or metal, or metalloid from an aqueous medium. Another purpose of the method according to the invention is to obtain an aqueous medium of improved purity or quality.

One objective of the present invention is therefore to provide an extracted, purified or isolated metal ion and/or metalloid ions and/or non-metal ion, for example as crystal or as precipitate or any suitable form, wherein the salt and/or metal is obtained in sufficient quality or purity to allow the salt and/or metal to be used in a subsequent particular purpose, process or application.

Another objective is that the aqueous medium can be used, directly or indirectly, in a wide variety of particular applications. One objective of the present invention is therefore to provide an aqueous medium, wherein such medium is of improved purity or of sufficient quality for it to be used, directly or indirectly, in a particular purpose, process or application. Such purposes, process or application can be related to farming or agricultural topics, human consumption, animal consumption, industrial applications or any other application. Also a combination of both purposes can be an objective of the current application.

An important characteristic of the method according to the current invention is that the ion to be extracted from the liquid medium is attracted or bound by an ionic liquid with a force which is greater than solvated in a conventional solvent, such as an aqueous medium. A salt will bind with an ionic liquid with greater affinity and strength than other types of solvents as the ionic liquid and salt are both charged. Consequently, the binding of salt and ionic liquid can be stronger than the hydrogen bonding when using conventional solvents than is the case using conventional solvents. In the context of the present invention, the aqueous medium from which the metal and/or metalloid ions are extracted is any medium containing water, such as tap water, water originating from a river, a lake, sea water, or water from an industrial (chemical) reaction medium. The water may be contaminated with heavy metals or toxic ions.

In the method of the present invention, the ionic liquid is preferably regenerated after step d), wherein the ionic liquid is reused in the present method.

A further advantage of the present invention is that ionic liquids can be reused once the method of the present invention has been carried out, as a consequence of which the amount of ionic liquid needed is limited making the method cost-effective. Ionic liquids can be reused for example because of their high chemical stability, negligible vapour pressure, and/or for some liquids also limited water miscibility. These properties allow an ionic liquid to be easily reused. According to the present invention, in step d), obtaining the metal and/or metalloid ions from the ionic liquid is carried out by at least one method selected from electrochemically reducing the metal and/or metalloid ions, crystallization, and precipitation.

The electrochemical reduction can be carried out in combination with crystallizing and/or precipitating the metal and/or metalloid ions. The crystallization and/or the precipitation can be carried out in the presence of an anti-solvent and/or by cooling. In one embodiment of the present invention, the ionic liquid and an anti-solvent are used in a continuous stream.

The electrochemical reduction in step d) is carried out by a process selected from the group plating, cementation and electrolyse. Step d) is advantageously carried out with a pre-determined potential depending on the metal to electrochemically reduce.

The electrochemical reduction gives electrons to the metal present with the ionic liquid. This can be done by

plating, by cementation, or electrolysis.

Plating is a process in which a metal salt is deposited on a conductive surface by reduction. In electroplating, an metal ion is supplied with electrons to form a non-ionic coating or surface layer. The process is performed by applying a potential over an anode, that is positively charged, and a cathode, that is negatively charged. According to the presently preferred embodiment according to the present invention, the potential applied is chosen such that a selectivity for a specific metal or salt to be deposited on the conducted surface is achieved. This enables removal of a specific component from the ionic liquid. Optionally, several plating sub processes are performed in series and/or in time with different chosen potentials, such that different specific components are deposited from the ionic liquids. This enables a purification of an aqueous medium and/or the production of specific components.

Cementation is a type of precipitation, a heterogeneous process in which ions are reduced to zero valence at a solid metallic interface.

Electrolysis is a method of using a direct electric current (DC) to drive an otherwise non-spontaneous chemical reaction. Electrolysis is commercially highly important as a stage in the separation of elements from naturally occurring sources such as ores using an electrolytic cell.

The present invention relates to an aqueous medium from which a dissolved salt, accordingly a medium containing ions of metals and/or metalloids, is extracted. In a preferred embodiment, the aqueous medium is selected from the group consisting of sea water, rain water, ground water, fresh water, industrially-derived water, for example from the chemical and mining industry, or waste water including accidental waste water. Besides the obvious meaning of sea water as water from a sea or ocean, the term also encompasses brackish water. Brackish water may be obtained from any natural source, such as where salt water and fresh water mix or blend or be obtained by mixing sea water with non-seawater such as potable water or fresh water. With industrially-derived water is meant water that is derived from any industrial process or step which produces water as a product or by-product or from which water can be obtained as a product or by-product.

With waste water is meant herein any water that is adversely affected in quality by an influence of human activity. Usually water or an aqueous medium which is produced as a by-product from a main process wherein water is used or produced is regarded as waste water. Examples of waste water comprise aqueous waste discharged by domestic, municipal, commercial, industrial or agricultural activities. Waste water also comprises aqueous waste from a process or step which is part of an internal process as part of industrial activity. As a result, waste water can comprise a wide range of contaminants and of different concentrations. Waste water can for example result from production of energy by a nuclear power plant, manufacturing of food or drinks for human consumption, or the like. It lies within the capabilities for the person skilled to assess what waste is, which embodiments of waste water are suitable for use in the invention and how or when to apply the method according to the invention.

One of the advantages of using ionic liquids is the prevention of biofouling and scaling in process equipment. In addition, ionic liquids enable treatment of substantially any salt concentration.

As mentioned, the method according to the current invention can be used to selectively extract ions from an aqueous medium. In case of sea water or waste water, the method according to the invention can be used to selectively extract certain, specific salts and/or metals from these aqueous media. The method can also be used to extract a variety or selection of salts from such media. In case of waste water, the method of the invention is especially suitable to selectively extract a valuable solute or solutes. A particular advantage of the invention is that the selectivity for extracting a particular salt or metal from an aqueous medium can be controlled or modified by choosing or selecting a particular ionic liquid which can be used to extract the salt or metal. From the ability to extract a particular salt or salts and/or metal from an aqueous medium according to the invention it is clear that such selective extraction allows the provision of salt(s) and/or metal(s) of interest of certain purified form.

Another advantage of the current invention is that ions can be extracted from an aqueous medium whereby the salt, or metal ions and/or metalloid ions is separated off instead of solvent aqueous medium. This renders the method according to the invention particularly energy-efficient and thus cost-effective. This is particularly relevant when the concentration of a salt or metal is low. In contrast, high amounts of water need to be separated off in conventional methods such as by evaporation of the solvent. Separating off the water in such cases is a costly factor in such conventional methods. Consequently, the method according to the invention is characterized by low energy consumption as compared to conventional desalination methods and metal winnings.

According to the present invention, step a) can comprise adding an extractant to improve transferring the metal and/or metalloid ions from the aqueous medium to the ionic liquid.

According to the present invention, an extractant, as well designated as extracting agent, can be selected from the group consisting of oxalic acid, malonic acid, succinic acid, glutaric acid, adipic acid, pimelic acid, citric acid, isocitric acid, aconitic acid, and propane-1,2,3-tricarboxylic acid. Citric acid, oxalic acid and sugars are selective to HgS and SbS, relatively to ZnS. Tiron (1,2-Dihydroxybenzene-3,5-disulfonic acid disodium salt hydrate), mercaptosuccinic acid, thiomalic acid, D,L-penicillamine, zincon (2-[5-(2-hydroxy-5-sulfophenyl)-3-phenyl-1-formazyl]benzoic acid monosodium salt), cysteine, calcone (1,3-diphenyl-2-propen-1-one) are selective to copper ions relative to mercury and zinc ions.

Preferably, the mixing of aqueous medium and ionic liquid comprises the addition of an extractant to improve the transfer of salts and/or metals from the medium to the ionic liquid. The use of citric acid as an extractant appeared beneficial and showed an improved selectivity, for example, in the extraction of copper.

The present disclosure also relates to ionic liquids which comprise an anion selected from the group of sulphates, triflates, triflamides or anions comprising acidic rest groups.

According to the present invention, step b) is carried out by a process selected from the group decantation, distillation and membrane distillation.

Another aspect of the invention relates to a hydrophobic ionic liquid and water which are used in a continuous stream. This aspect of the invention has the advantage that a continuous flow is achieved instead of batch-wise extraction of a salt comprising metal ions and/or metalloid ions and/or non-metal ions.

In another embodiment of the invention, the ionic liquid is regenerated after step d). Regeneration of the ionic liquid allows a more efficient use of ionic liquids and consequently allows the method according to the invention to be applied is more cost-effectively.

Another aspect of the invention relates to a solute or specific salt, (accordingly, the ions thereof) which is extracted from the aqueous medium. In a preferred embodiment of the invention, the salt from the aqueous medium comprises an element selected from the group consisting of Li, Na, K, Rb, Cs, Be, Mg, Ca, Sr, Ba, Cs, Fr, Sr, Y, La, Ra, Ti, Zr, Hf, V, Nb, Ta, Cr, Mo, W, Mn, Tc, Re, Fe, Ru, Os, Co, Rh, Ni, Pd, Pt, Cu, Ag, Au, Zn, Cd, Hg, U, B, Al, Ga, In, Tl, Sn, Pb, As, Sb, Bi, actinides, lanthanides, F, Cl and I. When dissolved, such elements will be present in an aqueous medium, either as cation (e.g. Na, K, Mg, Ca, Fe, U) or as anion (e.g. F, Cl, I). Also, other elements are possible, like Br, At and Cd. Depending on the ionic liquid to be used, such ions readily transfer from the aqueous medium to the ionic liquid. For the skilled person it is clear which ionic liquid can be used in particular embodiments to extract a salt or metal from the aqueous medium.

According to the present invention, step d) can be performed in combination with precipitating and/or crystallizing metalloid ions and/or non-metal ions present in the ionic liquid. In a preferred embodiment of the invention, ions are extracted and obtained from the ionic liquid using an electrochemical reduction and, in addition, by precipitating and/or crystallizing a salt or the counterion of the metal ions and/or metalloid ions from the ionic liquid. A combination of these steps comprises performing the steps in series and/or at the same time.

According to this embodiment, precipitating and/or crystallizing the salt and/or metal preferably is by adding an anti-solvent to the ionic liquid, cooling the ionic liquid or changing the pH of the ionic liquid.

In the context of the present invention, the term anti-solvent is to be understood as any medium with which the ionic liquid can be treated to allow salt(s) and/or metal(s) to be obtained from the ionic liquid and which subsequently allows the salt(s) and/or metal(s) to be obtained from the anti-solvent, such as by precipitation or crystallization. In particular, such treatment comprises mixing, contacting or blending of a volume of an ionic liquid which comprises the salt(s) or metal(s) to be obtained with a volume of the anti-solvent to allow the salt(s) or metal(s) to be precipitated from the ionic liquid. Such a treatment has the advantage that a salt and/or metal which is dissolved by the ionic liquid can be efficiently obtained from the ionic liquid by allowing the salt and/or metal to precipitate out of the ionic liquid. For example, by directly obtaining the salt and/or metal from the ionic liquid, the necessity of applying or using energy to isolate, purify or crystallize the salt and/or metal by e.g. evaporation of the solvent is absent. The amount of energy needed to obtain a salt and/or metal according to the method provided by the current invention is therefore less than compared to conventional methods. Also, as a consequence of the use of an anti-solvent or by cooling of the ionic liquid, no acids or bases are needed for removal of a salt from the ionic liquid.

In case an ionic liquid is used which comprises a hydrophilic ion or ions, a salt from an aqueous medium binds the hydrophilic ion(s) forming a complex comprising a salt ion and a hydrophilic ion from the ionic liquid. Subsequently, the complex can be obtained from the aqueous medium, for example by filtration such as reverse osmosis, nanofiltration or by using a zeolite membrane.

An advantage of the chemical stability of ionic liquids is that they allow to be reused, also after the ions have been extracted there from. After extraction the ionic liquid is of sufficient purity and chemical composition for it to be reused in a subsequent extraction of a salt and/or metal from an aqueous medium.

Cooling the ionic liquid herein means decreasing the temperature of the ionic liquid comprising the salt, or the ions. Said decrease in temperature is such as at least about 10°C. When the temperature of the ionic liquid is decreased by 10°C, the solubility of the salt and/or metal in the ionic liquid is decreased, in some cases by about 50%. The assessment, or determination, of said decrease in temperature allows to obtain a particular salt and/or metal from a particular solvent.

The anti-solvent may be a supercritical medium. With supercritical medium herein is meant a medium which, as a result of suitable temperature and pressure conditions, has both properties of a liquid and a gas. Under such conditions, the medium can also be referred to as a supercritical fluid. With a supercritical fluid is meant a medium with a pressure above the critical pressure and the critical temperature resulting in a medium with both properties of a liquid and a gas.

One advantage of a supercritical medium is that the anti-solvent behaviour of such a medium can be easily adjusted and designed for specific situations or conditions. The anti-solvent behaviour can be adjusted by modification of the density of such a medium. The density of such media can be controlled in a quite straightforward manner by adjusting the pressure and temperature of such media. The use of non-supercritical media does not allow such manipulation to the same extent as is possible with a supercritical medium.

The supercritical medium is preferably carbon dioxide. It is a property of ionic liquids to not have a measurable vapour pressure and to not dissolve in supercritical carbon dioxide. Thus, the major advantage of using carbon dioxide as anti-solvent is that the ILs are not soluble in the carbon dioxide and consequently, preventing a loss of ILs. Another advantage of using supercritical carbon dioxide as anti-solvent is that a salt and/or metal to be extracted from a solvent will remain in the supercritical carbon dioxide to a lesser extent than when using other anti-solvents. As a result of this, the method according to the invention allows the anti-solvent to be reused without unnecessary, additional costly measures connected to the use of an anti-solvent.

Other anti-solvents may be used, such as those selected from the group consisting of supercritical ethane, propane and the like. Salts do not easily dissolve in these supercritical media. From this, it will be clear to the skilled person which other supercritical media can be used.

The salt and/or metal may be obtained from the ionic liquid by autoclaving the ionic liquid and the supercritical medium.

Further aspects of the disclosure relate to the advantageous properties of ionic liquids. In one case the ionic liquid is not miscible with water. In a second preferred case the ionic liquid has polar and a-polar properties. In a third preferred case, the ionic liquid has a melting point below 100°C. In a fourth preferred case, the ionic liquid has thermal stable properties at any temperature between -100°C and 400°C. As a rule of thumb, ionic liquids are thermally-stable in the indicated temperature range. When considering particular ionic liquids, this temperature-dependency can be narrower (e.g. to 250°C), shifted or can extend the indicated range. It will be clear for the skilled person, that each individual ionic liquid is thermally stable in a specific range. In a fifth preferred case, the ionic liquid has a vapour pressure of less than $10^{-9}$ Pa at ambient conditions.

In a sixth preferred case, the ionic liquid has chemical stable properties. In a seventh preferred case, the ionic liquid is characterized by having a water content preferably below 3%, more preferably below 2%, even more preferably below 1% and most preferably below 0.5%. Ionic liquids that are stable in water are preferably also biodegradable and also preferably hydrophobic. It falls within the capabilities of the skilled person to choose or select, based on the above mentioned embodiments, a specific ionic liquid or combination of ionic liquids for a specific purpose or application to be performed. In essence such applications comprise extraction of a salt, or salts, and/or metal ions and/or metalloid ions and/or non-metal ions from aqueous media.

Ionic liquids furthermore have the advantage of being environmentally benign solvents due to their negligible vapour pressure. As a consequence, ionic liquids according to the invention cannot evaporate or lead to solvent emission into the atmosphere as a consequence of which they cannot be inhaled by workers.

Another aspect of the present invention, is accordingly a use of an ionic liquid for the extraction of metal and/or metalloid ions from an aqueous medium. Such ionic liquids are tetraoctylammonium linoleate methyltrioctylammonium linoleate, tetraoctylammonium oleate, and methyltrioctylammonium oleate.

Another aspect of the present invention is the use of said ionic liquids as in membranes, such as charge mosaic membranes. In particular, these membranes can be used in any dialysis process, such as piezodialysis. The term membrane is to be understood a thin, film-like structure that separates two fluids. It acts as a selective barrier, allowing some particles or chemicals to pass through, but not others. The ionic liquids of the present invention can for example be polymerized, in particular to form network of tetraoctylammonium linoleate methyltrioctylammonium linoleate, tetraoctylammonium oleate, and/or methyltrioctylammonium oleate. The polymerized networks obtained may be manufactured for example by crosslinking of the ionic liquid of the present invention, with acrylic acid or methacrylic acid, or any carboxylic acid comprising a vinyl group. Accordingly, polymerized networks are obtainable by the crosslinking of the ionic liquids according to the present invention, as described above, with a carboxylic acid comprising a vinyl group.

Yet another aspect of the present invention is a method for selectively transporting salts of an aqueous medium within a layer of ionic liquid wherein the ionic liquid according to any one of the ionic liquids according to the present invention, forms a layer on top of a membrane and wherein said layer selectively transports salts.

According to the present invention, the method for selectively transporting of an aqueous medium within a layer of ionic liquid comprises a membrane that can further be used in piezodialysis.

The definitions, advantages and preferences described for the method according to the present invention are applicable to all aspects of the present invention, namely also the ionic liquids according to the present invention, the networks described above and their use thereof.

Further advantages, features and details of the invention are elucidated on a basis of preferred embodiments thereof, wherein reference is made to the accompanying drawings:

Figures 1 and 2: schematic representations of embodiments according to the invention.

The process (figure 1) according to the present invention starts with the starting material 4 that in a synthesis step 6 forms the ionic liquid. This ionic liquid is mixed with the aqueous media, for example waste water 8, in mixing step 10. In mixing step 10, ions are extracted for the waste water 8 and transferred to the ionic liquid. In separating step 12 the purified waste water 14 is separated from the ionic liquid with added metals and/or salts 16. To regenerate the ionic liquid a plating step 18 is performed. Plating step 18 results in a regenerated ionic liquid 20 that can be re-used and an amount ions.
Another embodiment of the process 22 (figure 2) according to the present invention starts with mixing an ionic liquid in mixing step 24 in an aqueous medium, for example waste water. In a further step 26, ions are extracted from the waste water and transferred to the ionic liquid (step 26 is a mixing step of water and IL). In a further step, a separating step 28, the purified waste water is separated from the ionic liquid with added ions. To separate the ionic liquid plating step 30 is performed. Plating step 30 results in separating the ions from the ionic liquid that can be re-used in the first step of the process.

The present invention is further illustrated in the following experiments that are not intended to limit the scope of the invention in any way.

## EXAMPLES

### Examples 1 to 4

#### *Materials*

Ionic liquids were synthesized with reagents purchased from Sigma-Aldrich. Linoleic and oleic acid had a purity ≥99%. Tetraoctylammonium bromide and methyltrioctylammonium chloride had a purity of 98% and 97% respectively. Ethanol, 70% was used from (Merck) and toluene chromosolv®, for HPLC, 99% from Sigma-Aldrich. For the metal solutions milliQ water was used that was obtained by a Millipore Milli-Q® biocel that used a Q-grade® colom. All chemicals were used as received, without any additional purification step. For compoisition the standard metal solutions, anhydrous lithium chloride (99%) was obtained by Sigma-Aldrich. NaCl (>99%), KCl (>99.9%), $ZnCl_2$ (98%), $FeCl_2 \cdot 4H_2O$ (> 99.0%) and $MnCl_2 \cdot 2H_2O$ (99%) were purchased by VWR-Prolabo®.

#### *Experimental setup*

The metal extraction experiments were performed with a Heidolph multi reax multi vortex and an Allegra™ X-12R centrifuge from Beckman coulter. The different water phases were analysed via IC, ICP and LC-MS. Metrohom 761 Compact IC and 762 IC interface was used to analyze the anion concentration with IC Net. Cations were measured with a Perkin Elmer precisely ICP which used a optical emission spectrometer Optima 5300DV. Results were obtained via a Winlab 32 ICP continuous Automated analysis. To detect of a part of our ionic liquid dissolved in water after metal extraction we used LC-MS. An Agilent Technologies 1200 series that used acetonitrile:water 90:10 as eluent was used and worked with an Agilent masshunter workstation data acquisition.

#### *Analyses*

Analyses of the synthesized end products were performed on a 400 Brucker nuclear magnetic resonance (NMR) for $^1H$ NMR. Density and viscosity measurements were carried out on an Anton Paar SVM 3000/G2 type stabinger, with an uncertainty of +/- 0.0005g/cm$^3$ for the density, +/- 0.005mPa·s for the viscosity, and +/- 0.01K for the temperature. DSC Q 1000, and Perkin Elmer Pyris 1 were used to obtain the melting temperature with a scan rate of 10°C min$^{-1}$. Decomposition temperatures were measured with TGA Q 500 apparatus. Decomposition temperatures were determined by using a scan rate of 10°C min$^{-1}$ under a nitrogen flow and the spectrums were analysed with TG instruments software. The water content of the ILs were determined by a coulometric Karl Fischer titrator (Mettler Toledo, model DL39).

#### *Experimental salt extraction procedure*

First two aqueous metal solutions were prepared. The group I metal solution consist out of the salts lithium chloride, sodium chloride and potassium chloride. Of these salts 1 gram was dissolved in 100mL demineralized water. In the 100mL aqueous period IV metal solutions was dissolved potassium chloride, calcium chloride dehydrate, manganese chloride dehydrate, Iron(II) chloride tetrahydrate and zinc sulfate pentahydrate. Ionic liquids were then synthesized to investigate if their applicability in metal extraction. Tetraoctylammonium oleate and methyltrioctylammonium

linoleate were tested for alkali metal extraction, while tetraoctylammonium linoleate and methyltrioctylammonium oleate were tested for the period IV metal salt extraction. 1g of ionic liquid was divided equally over 2 centrifuge tubes. Then, in one tube 0.5mL of metal solution was added and in the other, 0.5mL demineralized water. The mixture was stirred for 2h on a vortex and put afterwards in the centrifuge for 10min at 3750 rpm. Aqueous phases were analyzed on IC and ICP to detect if metal extraction took place. LC-MS was used to see if we had metal exchange. Extraction efficiencies (E) were calculated by:

$$E(\%) = (c_{0aq} - c_{1aq})/c_{0aq} \times 100$$

Where $c_{0aq}$ and $c_{1aq}$ are the total metal concentrations in the aqueous phase before and after the experiment.

***Synthesis***

The four ILs were synthesized at the same experimental conditions by a two step synthesis. First, sodium fatty acid was made by adding an equimolar amount of sodium hydroxide to the fatty acid dissolved in ethanol by stirring it overnight at room temperature. Afterwards, a metathesis reaction, for 3h at room temperature, was performed between the tetraalkylammonium chloride, dissolved in toluene and water, and the sodium fatty acid. A viscous liquid was obtained after purification of the organic phase.

*Synthesis of tetraoctylammonium linoleate* (*$N_{8888}$ C18:2*) Sodium hydroxide (0.71g, 17.8mmol) was added to linoleic acid (5.55ml, 17.8mmol) dissolved in ethanol 70% (50mL). The reaction mixture was stirred overnight at room temperature. Removal of the solvent under vacuum yielded the product as a white soap. To tetraoctylammonium chloride (8.94g, 17.8mmol) dissolved in Toluene (50mL) was then added sodium linoleate (5.4g, 17.8mmol), and water (50mL). The reaction mixture was stirred for 3h at room temperature. The water phase was separated and the organic phase was washed with water (3 x 50mL). Removal of the solvent under vacuum yielded the product as a red viscous liquid. Yield: 13.1g (99%).

*$^1H$ NMR (400 MHz, $CDCl_3$):* $\delta$ = 0.87 (m, 15H), 1.29 (m, 60H), 1.64 (m, 10H), 2.03 (quin, J=7x(4); 4H), 2.17 (m, 2H), 2.76 (t, J=6.4x(2); 2H), 3.36 (m, 8H), 5.34 (m, 4H)

*Synthesis of methyltrioctylammonium linoleate ($N_{8881}$ C18:2)*

Synthesis of sodium linoleate was repeated according to the synthesis of tetraoctylammonium linoleate. Sodium linoleate (5.4g, 17.8mmol), and water (50mL) were added to methyltrioctylammonium chloride (7.2g, 17.8mmol) dissolved in Toluene (50mL). The reaction mixture was stirred for 3h at room temperature. The water phase was separated and the organic phase was washed with water (3 x 50mL). Removal of the solvent under vacuum yielded the product as a yellow viscous liquid. Yield: 11.4g (99%).

*$^1H$ NMR (400 MHz, $CDCl_3$):* $\delta$ = 0.87 (m, 12H), 1.3 (m,51H), 1.61 (m, 8H), 2.02 (quin, j=6.8x(4); 4H), 2.17 (m, 2H), 2.75 (t, j=6.4x(2); 2H), 3.31 (s, 3H), 3.41 (m, 6H), 5.33 (m, 4H)

*Synthesis of Tetraoctylammonium oleate ($N_{8888}$ C18:1)*

First sodium oleate was made by adding sodium hydroxide (0.71g, 17.6mmol) to oleic acid (5.56mL, 17.6mmol) dissolved in ethanol 70% (50mL). The reaction mixture was stirred overnight at room temperature. Removal of the solvent under vacuum yielded the product as a white soap. This sodium oleate (5.4g, 17.6mmol) was added to tetraoctylammonium chloride (8.84g, 17.6mmol) dissolved in Toluene (50mL) together with water (50mL). The reaction mixture was stirred for 3h at room temperature. The water phase was separated and the organic phase was washed with water (3 x 50mL). Removal of the solvent under vacuum yielded the product as a orange viscous liquid. Yield: 10.44g (72%).

*$^1H$ NMR (400 MHz, $CDCl_3$):* $\delta$ = 0.86 (m, 15H), 1.28 (m, 60H), 1.65 (m, 10H), 1.99 (m, 4H), 2.18 (m, 2H), 3.41 (m, 10H), 5.32 (m, 2H)

*Synthesis of methyltrioctylammonium oleate ($N_{8881}$ C18:1)*

Sodium oleate was synthesized according to the synthesis in tetraoctylammonium oleate. Sodium oleate (5.4g, 17.6mmol) and water (50mL) were added to methyltrioctylammonium chloride (7.11g, 17.6mmol) dissolved in Toluene (50mL). The reaction mixture was stirred for 3h at room temperature. The water phase was separated and the organic phase was washed with water (3 x 50mL). Removal of the solvent under vacuum yielded the product as a yellow viscous liquid. Yield: 12.35g (98%).

*$^1H$ NMR (400 MHz, $CDCl_3$):* $\delta$ = 0.86 (m, 12H), 1.25 (m, 51H), 1.62 (m, 8H), 1.99 (m, 4H), 2.2 (m, 2H), 3.31 (s, 3H), 3.41

(m, 7H), 5.32 (m, 2H)

***Results and discussion***

First ionic liquids with fatty acid anions were synthesized to perform the experiment. Tetraalkylammonium halide ILs were used in a metathesis reaction with the sodium salt of the fatty acids. The synthesis of these ILs was very simple and they were obtained in high (between 72 and 99%) yields. The physical properties of the synthesized ILs are outlined in Table 1. Fatty acids, which have already a low density, were used as anions. These ILs have, in contrast to common ILs, a density lower than water. Viscosities were found to be more dependent on the cationic structure. Water content is also presented because water is present in the synthetic route of these ILs.

Table 1: physical content of synthesized ionic liquids.

| ILs | Density[a] ($\rho$; g/cm$^3$) | dynamic viscosity ($\eta$: mPa.s) | kinematic viscosity[a] (n ; mm$^2$/s) | $T_m$ (°C) | $T_d$ (°C) | [$H_2O$] (ppm) |
|---|---|---|---|---|---|---|
| $N_{8888}$ C18:2 | 0.883 | 1280 | 1450 | <-60 | 170 | 6900 |
| $N_{8881}$ C18:2 | 0.889 | 1047 | 1178 | -37 | 150 | 9800 |
| $N_{8888}$ C18:1 | 0.875 | 1234 | 1410 | <-60 | 175 | 7200 |
| $N_{8881}$ C18:1 | 0.884 | 1321 | 1494 | -25 | 169 | 10880 |

[a]Results were obtained at 25.0°C.

The synthesized ILs were evaluated for their metal extraction properties. As a result of the extraction experiment, a color change was noticed for the ILs that were mixed with the period IV metal solution. No color change was noticed for the ILs that were used with the aqueous group I metal solution. A comparison in aqueous metal concentrations was done for all four ILs after the extraction experiment. The extraction efficiencies of the ILs for the specific metals can be found in Table 2 for the alkali metal salts and in Table 3 for the period IV metal salts.

From table 3, it is shown that the lithium concentration presents a reduction. The slight increase of sodium and potassium can be explained because sodium hydroxide was used in the synthesis of the ILs, and potassium is a major impurity in sodium hydroxide.

Table 3 shows a very high extraction (> 99%) for the iron and zinc concentrations using the IL tetraoctylammonium linoleate as extractant. In addition, the concentration of manganese was significantly reduced (up to 71%).

Methyltrioctylammonium oleate showed similar excellent results for iron and zinc, as well as a good extraction of manganese. The extraction of the period IV metals is probably the reason for the color change that we observed.

Together with the reduction of these metals, a reduction in chloride concentration was observed.

Table 2. Concentration of the different ions in group I metal solution before ($C_0$) and after extraction with methyltrioctylammonium linoleate ($C_{1,\ N8881\ C18:2}$) or with tetraoctylammonium oleate ($C_{1,\ N8888\ C18:1}$) and their extraction efficiencies (E).

| | $C_0$ (g/L) | $C_{1,\ N8881}$ C18:2 (g/L) | $C_{1,\ N8888}$ C18:1 (g/L) | $E_{N8881}$ C18:2 (%) | $E_{N8888}$ C18:1 (%) |
|---|---|---|---|---|---|
| Chloride | 20.5 | >16.0 | >16.0 | <21.8 | <21.8 |
| Potassium | 5.8 | 13.9 | 6.0 | 0.0 | 0.0 |
| Sodium | 4.3 | 8.0 | 3.9 | 0.0 | 0.0 |
| Lithium | 2.0 | 1.6 | 1.5 | 17.4 | 22.1 |

Table 3. Extraction efficiencies of the different ions in the period IV metal solution after extraction with tetraoctylammonium linoleate ($E_{1,N8888\ C18:2}$), methyltrioctylammonium oleate ($E_{2,N8881\ C18:1}$), methyltrioctylammonium linoleate ($E_{3,N8881\ C18:2}$), tetraoctylammonium oleate ($E_{4,N8888\ C18:1}$).

| | $E_1$ (%) | $E_2$ (%) | $E_3$ (%) | $E_4$ (%) |
|---|---|---|---|---|
| Chloride | 89.5 | 84.1 | 73.1 | 90.8 |
| Iron | 88.8 | 96.5 | 71 | 98.4 |
| Manganese | 58.6 | 69.4 | 37.3 | 70.7 |
| Zinc | 99.8 | 94.9 | 99.6 | 99.8 |

A calculation was done to determine the ratio of extraction/exchange. Therefore, the theoretical concentration of chloride was divided from the removed metal concentration by the observed removed concentration of chloride. These values ranged from 0.88 to 0.93. This means that salt extraction is the dominant mechanism. There are two reasons why this value is slightly lower than 1: 1) next to metal extraction, there is also some anion exchange (although no emulsion was observed) and 2) oxidation of Fe(II) into Fe(III) which seems to be the most likely explanation.

For tetraoctylammonium linoleate, a small precipitate was formed. This could explain the excess of chloride extracted in terms of a metal fatty acid complex formation. For methyltrioctylammonium oleate, the theoretical expected chloride concentration equals the extracted amount of chloride, which points out that 100% metal extraction occurs. Because no ion exchange is observed, this process is a green alternative for metal extraction from aqueous phases. The methyltrioctyl ammonium based ILs were able to form an emulsion with distilled water (blanco) under vigorous shaking. ESI-MS results confirmed an increase of the cation methyltrioctyl ammonium in the water phase after emulsion formation by vigorous shaking. Accordingly, the ions for the used ILs have to be biocompatible, non-toxic, and highly hydrophobic.

Therefore, selectivity for the anions of mineral acids instead of organic acids is present and observable. Ionic liquids with unsaturated fatty acids as anions were synthesized via a metathesis reaction. The advantages of these ILs are their simple synthesis, their sustainability (fatty acids anions are renewable), their biocompatibility and their non-toxicity. This makes these ILs "simpler and greener" compared to other TSILs used for metal extraction. While they showed no or negligible extraction efficiencies for alkali metal salts, very good extraction efficiencies (>99%) were observed for the period IV metal salts. The extraction process was based on ion extraction instead of ion exchange, which minimized IL leakages into the water phase.

**Example 5**

Analogous to example 1 to 4, an ionic liquid comprising tetraoctylammonium monensin was tested on the extraction of sodium.

0.5 gram ionic liquid was dissolved in 10 mL Toluene. Subsequently, this solution was mixed with 1 mL salt solution. After separation of the ionic liquid and obtaining of sodium the following results were obtained.

Table 4. Concentration sodium in salt solution before ($C_0$) and after extraction with tetraoctylammonium monensin ($C_1$) and the extraction efficieny (E)

| | $C_0$ (g/L) | $C_1$ (g/L) | E (%) |
|---|---|---|---|
| Potassium | 5.44 | 5.48 | -0.7 |
| Sodium | 3.93 | 3.10 | 21.0 |
| Lithium | 1.63 | 1.65 | -1.1 |

Table 4 shows that the concentration of sodium is reduced after treatment with tetraoctylammonium monensin ionic liquid. Further, the treatment with tetraoctylammonium monensin is selective for sodium versus potassium and lithium, since the concentration potassium and lithium remind substantially unchanged.

**Example 6**

In this example the ionic liquid tetraoctylphosphonium oleate is tested on extraction efficiency of transition metals and rare earth metals.

***Synthesis of the tetraoctylphosphonium oleate ($P_{8888}$ C18:1)***

The IL, tetraoctylphosphonium oleate ($P_{8888}$ C18:1) was synthesized in a one pot synthesis. Sodium oleate was formed by letting oleic acid (21 mL, 66.52 mmol) and sodium hydroxide (3.55 g, 88.69 mmol) stir for 5 hours in 250 mL water at room temperature. Directly after this, tetraoctylphosphonium bromide (25 g, 44.34 mmol) was added to the reaction mixture and the mixture was stirred for an additional 3 hours at 55°C. Afterwards, the organic phase was vigorously washed with water (6 x 200 mL). Organic phase was then concentrated under reduced vacumm to obtain a dark yellow IL. Physical properties of this IL are outlined in Table 5.

Table 5: physical content of synthesized ionic liquid

| IL | Density[a] ($\rho$; g/cm$^3$) | dynamic viscosity[a] ($\eta$; mPa.s) | kinematic Viscosity[a] (n ; mm$^2$/s) | $T_m$ (°C) | $T_d$ (°C) | [$H_2O$] (ppm) |
|---|---|---|---|---|---|---|
| $P_{8888}$ C18:1 | 0.883 | 1280 | 1450 | <-60 | 170 | 6900 |

[a]Results were obtained at 25.0°C

***Experimental salt extraction procedure***

Different salt solutions have been prepared. The transition metals solution, containing 2000 ppm of each metal ($MnCl_2$, $CoCl_2$, $NiCl_2$, $CuCl_2$, $ZnCl_2$) and a rare earth metal solution, containing 2000 ppm of each rare earth were prepared by dissolving the metals in 50 mL water. Then, 0.5 mL of this salt solution was added to 1 mL of the IL, presaturated with water. 0.5 mL of a water/HCl/NaOH solution was then added to these liquids to obtain the desired pH. Metal loading of the organic phase was performed by presaturating the ionic liquid with water of the same pH as the metal solution. Afterwards, a specific volume of a 60 000 ppm Ytterbium or Neodymium solution was added and diluted further with water of the same pH until a volume of 1 mL was obtained. Extractions were performed with intensive shaking at 2000 rpm for 10 minutes at 40 °C on a thermo shaker TMS-200. Later, the mixture was centrifuged on a Heraeus Labofuge 200 of Thermo Scientific for 5 min at 5300 rpm to separate the two layers for analysis.

***Analysis of the water phase and IL phase after metal extraction***

After each extraction experiment, both aqueous phases and IL phase were analysed on their metal content with a benchtop total reflection X-ray fluorescence (TXRF) spectrometer (Picofox S2, bruker) 100 mg of a Gallium 1000 ppm standard solution was added to 100 $\mu$L of the aqueous phase and diluted until 1mL with pure ethanol or water. For analysis of the IL phase, 20 mg of the IL was used instead of 100 $\mu$L water phase. Then 20 $\mu$L of each solution was dried in a hot air oven at 60 °C on different quartz glass carriers and analysed with TXRF.

**Results**

The extraction efficiencies are almost 100% for all metals. Specifically, using tetraoctylphosphonium oleate ionic liquid was able to metal separation of an aqueous mixture containing Co, Ni, Cu and Zn. Further, it was found that rare earth metals extraction varies one pH unit with the extraction pH of transition metals, showing that this ionic liquid is able to separate rare earth metals from transition metals.

The present invention is by no means limited to the above described preferred embodiments. The rights sought are defined by de following claims, within the scope of which many modifications can be envisaged.

**Claims**

**1.** Method for extracting metal and/or metalloid ions from an aqueous medium, comprising the steps of:

a) mixing the aqueous medium with an ionic liquid comprising an aliphatic carboxylate anion having at least one unsaturated carbon-carbon bond and having between 8 and 28 carbon atoms, preferably between 12 and 22 carbon atoms, the ionic liquid comprising a cation selected from the group consisting of ammonium, imidazolium, pyrrolidinium, pyridinium and phosphonium, and/or wherein the ionic liquid comprises an ammonium having at least one alkyl substituent comprising at least 8 carbon atoms;
b) transferring the metal and/or metalloid ions from the aqueous medium to the ionic liquid;

c) separating the ionic liquid and the aqueous medium; and
d) obtaining the metal and/or metalloid ions from the ionic liquid by at least one method selected from electrochemically reducing the metal and/or metalloid ions, crystallization, and precipitation.

**2.** Method according to any one of claims 1, wherein the ionic liquid is selected from the group tetraoctylammonium linoleate, methyltrioctylammonium linoleate, tetraoctylammonium oleate, methyltrioctylammonium oleate, tetraoctylammonium monensin, tetraoctylphosphonium oleate and a combination thereof.

**3.** Method according to any one of claims 1 to 2, wherein the electrochemical reduction in step d) is carried out by a process selected from the group plating, cementation and electrolysis, and/or wherein the step a) comprises adding an extractant to improve transferring the metal and/or metalloid ions from the aqueous medium to the ionic liquid, wherein the extractant is preferably selected from the group consisting of oxalic acid, malonic acid, succinic acid, glutaric acid, adipic acid, pimelic acid, citric acid, isocitric acid, aconitic acid, and propane-1,2,3-tricarboxylic acid, and/or wherein step b) is carried out by a process selected from the group decantation, distillation and membrane distillation, and/or wherein the ionic liquid is regenerated after step d), and/or wherein step d) is by a crystallization or a precipitation by using an anti-solvent or by cooling.

**4.** Method according to claim 3, wherein the ionic liquid and an anti-solvent are used in a continuous stream.

**5.** Use of an ionic liquid comprising tetraoctylammonium linoleate for the extraction of metal and/or metalloid ions from an aqueous medium.

**6.** Use of an ionic liquid comprising methyltrioctylammonium linoleate, for the extraction of metal and/or metalloid ions from an aqueous medium.

**7.** Use of an ionic liquid comprising tetraoctylammonium oleate for the extraction of metal and/or metalloid ions from an aqueous medium.

**8.** Use of an ionic liquid comprising methyltrioctylammonium oleate, for the extraction of metal and/or metalloid ions from an aqueous medium.

**9.** Use of an ionic liquid according to any one of claims 5 to 8 for use in a membrane.

**10.** Method for selectively transporting salts of an aqueous medium within a layer of ionic liquid wherein the ionic liquid according to any one of claims 5 to 8 forms a layer on top of a membrane and wherein said layer selectively transports salts.

**11.** Method according to claim 10, wherein said membrane is further used in piezodialysis.

**Patentansprüche**

**1.** Verfahren zum Extrahieren von Metall- und/oder Halbmetallionen aus einem wässrigem Medium, das die Schritte aufweist:

a) Mischen des wässrigen Mediums mit einer ionischen Flüssigkeit, die ein aliphatisches Carboxylat-Anion aufweist, das wenigstens eine ungesättigte Kohlenstoff-Kohlenstoff-Bindung und zwischen 8 und 28 Kohlenstoffatome, vorzugsweise zwischen 12 und 22 Kohlenstoffatome, hat,
wobei die ionische Flüssigkeit ein Kation aufweist, das ausgewählt ist aus der Gruppe bestehend aus Ammonium, Imidazolium, Pyrrolidinium, Pyridinium und Phosphonium und/oder wobei die ionische Flüssigkeit ein Ammonium aufweist, das wenigstens einen Alkylsubstituenten hat, der wenigstens 8 Kohlenstoffatome aufweist;
b) Übertragen der Metall- und/oder der Halbmetallionen aus der wässrigen Lösung in die ionische Flüssigkeit;
c) Trennen der ionischen Flüssigkeit und des wässrigen Mediums; und
d) Erhalten der Metall- und/oder der Halbmetallionen aus der ionischen Flüssigkeit durch wenigstens ein Verfahren, das ausgewählt ist aus dem elektrochemischen Reduzieren der Metall- und/oder der Halbmetallionen, der Kristallisierung und der Ausfällung.

**2.** Verfahren nach Anspruch 1, wobei die ionische Flüssigkeit ausgewählt ist aus der Gruppe von Tetraoctylammonium-Linoleat, Methyltrioctylammonium-Linoleat,Tetraoctylammonium-Oleat, Methyltrioctylammonium-Oleat, Tetraoctylammonium-Monensin, Tetraoctylphosphonium-Oleat und einer Kombination davon.

3. Verfahren nach einem der Ansprüche 1 bis 2,
wobei die elektrochemische Reduktion in Schritt d) von einem Prozess ausgeführt wird, der ausgewählt ist aus der Gruppe Plattierung, Zementierung und Elektrolyse und/oder wobei der Schritt a) das Hinzufügen eines Extraktionsmittels zum Verbessern des Übertragung der Metall- und/oder der Halbmetallionen aus dem wässrigen Medium an die ionische Flüssigkeit aufweist, wobei das Extraktionsmittel vorzugsweise ausgewählt ist aus der Gruppe bestehend aus Oxalsäure, Malonsäure, Bernsteinsäure, Glutarsäure, Adipinsäure, Pimensäure, Zitronensäure, Isocitronensäure, Aconitsäure und Propan-1,2,3-tricarboxylsäure, und/oder wobei der Schritt b) durch einen Prozess ausgewählt aus der Gruppe von Dekantierung, Destillation und Membrandestillation ausgeführt wird, und/oder wobei die ionische Flüssigkeit nach Schritt d) regeneriert wird, und/oder wobei der Schritt d) durch eine Kristallisierung oder eine Ausfällung unter Verwendung eines Anti-Lösungsmittels oder durch Kühlung erfolgt.

4. Verfahren nach Anspruch 3,
wobei die ionische Flüssigkeit und ein Anti-Lösungsmittel in einem fortlaufenden Strom verwendet werden.

5. Verwendung einer ionischen Flüssigkeit, die Tetraoctylammonium-Linoleat zur Extraktion von Metall- und/oder Halbmetallionen aus einem wässrigen Medium aufweist.

6. Verwendung einer ionischen Flüssigkeit, die Methyltrioctylammonium-Linoleat zur Extraktion von Metall- und/oder Halbmetallionen aus einem wässrigen Medium aufweist.

7. Verwendung einer ionischen Flüssigkeit, die Tetraoctylammonium-Oleat zur Extraktion von Metall- und/oder Halbmetallionen aus einem wässrigen Medium aufweist.

8. Verwendung einer ionischen Flüssigkeit, die Methyltrioctylammonium-Oleat zur Extraktion von Metall- und/oder Halbmetallionen aus einem wässrigen Medium aufweist.

9. Verwendung einer ionischen Flüssigkeit nach einem der Ansprüche 5 bis 8 zur Verwendung in einer Membran.

10. Verfahren zum selektiven Transportieren von Salzen eines wässrigen Mediums in einer Schicht einer ionischen Flüssigkeit, wobei die ionische Flüssigkeit nach einem der Ansprüche 5 bis 8 eine Schicht auf einer Membran bildet und wobei die Schicht in ausgewählter Weise Salze transportiert.

11. Verfahren nach Anspruch 10, wobei die Membran weiterhin in der Piezodialyse verwendet wird.

**Revendications**

1. Procédé d'extraction d'ions métalliques et/ou métalloïdes à partir d'un milieu aqueux, comprenant les étapes suivantes :

   a) le mélange du milieu aqueux avec un liquide ionique comprenant un anion carboxylate aliphatique ayant au moins une liaison carbone-carbone insaturée et ayant entre 8 et 28 atomes de carbone, de préférence entre 12 et 22 atomes de carbone, le liquide ionique comprenant un cation sélectionné dans le groupe constitué par un ammonium, un imidazolium, un pyrrolidinium, un pyridinium et un phosphonium, et/ou dans lequel le liquide ionique comprend un ammonium ayant au moins un substituant alkyle comprenant au moins 8 atomes de carbone ;
   b) le transfert des ions métalliques et/ou métalloïdes depuis le milieu aqueux vers le liquide ionique ;
   c) la séparation du liquide ionique et du milieu aqueux ; et
   d) l'obtention des ions métalliques et/ou métalloïdes à partir du liquide ionique par au moins un procédé sélectionné parmi une réduction électrochimique des ions métalliques et/ou métalloïdes, une cristallisation et une précipitation.

2. Procédé selon la revendication 1, dans lequel le liquide ionique est sélectionné dans le groupe comprenant le linoléate de tétraoctylammonium, le linoléate de méthyltrioctylammonium, l'oléate de tétraoctylammonium, l'oléate de méthyltrioctylammonium, la tétraoctylammonium monensine, l'oléate de tétraoctyl-phosphonium et une combinaison de ceux-ci.

3. Procédé selon l'une quelconque des revendications 1 à 2, dans lequel la réduction électrochimique dans l'étape d) est réalisée par un procédé sélectionné dans le groupe comprenant un placage, une cémentation et une électrolyse, et/ou dans lequel l'étape a) comprend l'ajout d'un agent d'extraction pour améliorer le transfert des ions métalliques et/ou métalloïdes depuis le milieu aqueux vers le liquide ionique, dans lequel l'agent d'extraction est sélectionné de préférence dans le groupe constitué par l'acide oxalique, l'acide malonique, l'acide succinique, l'acide glutarique, l'acide adipique, l'acide pimélique, l'acide citrique, l'acide isocitrique, l'acide aconitique, et l'acide propane-1,2,3-tricarboxylique, et/ou dans lequel l'étape b) est réalisée par un procédé sélectionné dans le groupe comprenant une décantation, une distillation et une distillation sur membrane, et/ou dans lequel le liquide ionique est régénéré après l'étape d), et/ou dans lequel l'étape d) est par une cristallisation ou une précipitation en utilisant un anti-solvant ou en refroidissant.

4. Procédé selon la revendication 3, dans lequel le liquide ionique et un anti-solvant sont utilisés dans un courant continu.

5. Utilisation d'un liquide ionique comprenant du linoléate de tétraoctylammonium pour l'extraction d'ions métalliques et/ou métalloïdes à partir d'un milieu aqueux.

6. Utilisation d'un liquide ionique comprenant du linoléate de méthyltrioctylammonium, pour l'extraction d'ions métalliques et/ou métalloïdes à partir d'un milieu aqueux.

7. Utilisation d'un liquide ionique comprenant de l'oléate de tétraoctylammonium pour l'extraction d'ions métalliques et/ou métalloïdes à partir d'un milieu aqueux.

8. Utilisation d'un liquide ionique comprenant de l'oléate de méthyltrioctylammonium, pour l'extraction d'ions métalliques et/ou métalloïdes à partir d'un milieu aqueux.

9. Utilisation d'un liquide ionique selon l'une quelconque des revendications 5 à 8 pour une utilisation dans une membrane.

10. Procédé de transport sélectif de sels d'un milieu aqueux à l'intérieur d'une phase de liquide ionique dans lequel le liquide ionique selon l'une quelconque des revendications 5 à 8 forme une phase au-dessus d'une membrane et dans lequel ladite phase transporte sélectivement les sels.

11. Procédé selon la revendication 10, dans lequel ladite membrane est utilisée en outre en piézodialyse.

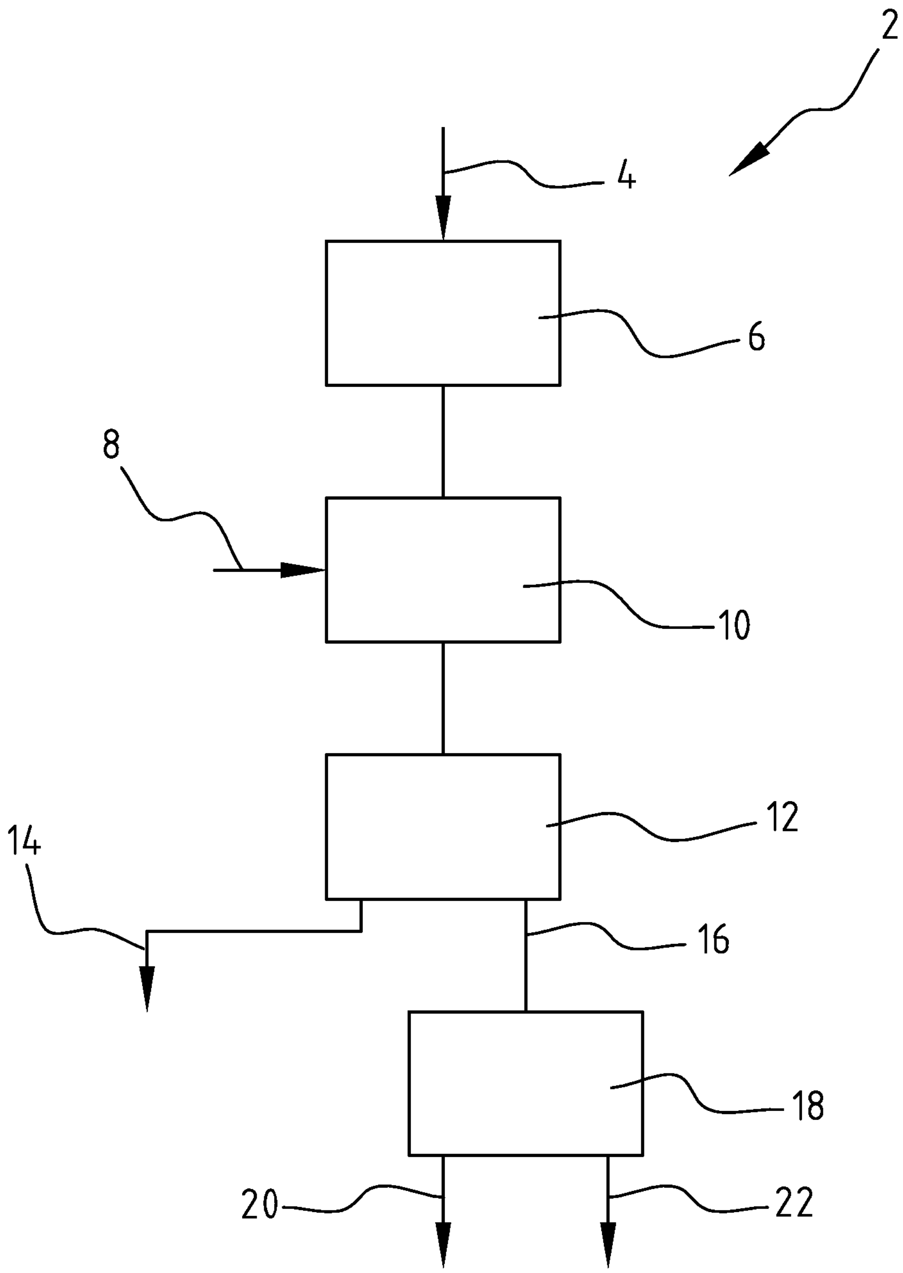


FIG. 1

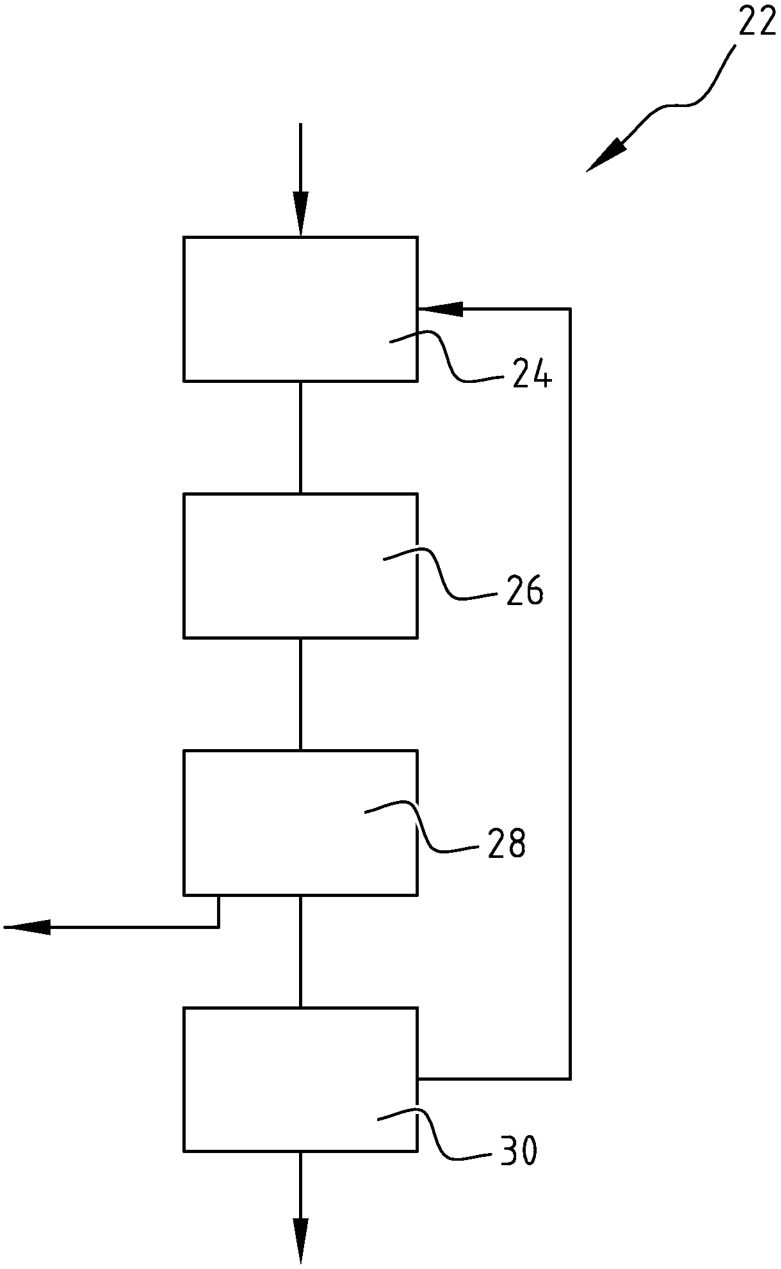


FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2258706 A2
- EP 0005859 A1


### Non-patent literature cited in the description


- Ionic Liquid as Novel Solvent for Extraction and Separation in Analytical Chemistry. Ionic Liquids: Applications and Perspectives
- **LISA FISCHER et al.** *Ionic liquids for extraction of metals and metal containing compounds from communal and industrial waste water,* ISSN 0043-1354, 4601-4614